**Europäisches Patentamt**

**European Patent Office**

**Office européen des brevets**

(11) Veröffentlichungsnummer: **0 316 750**

**A1**

## (12) EUROPÄISCHE PATENTANMELDUNG

(21) Anmeldenummer: **88118694.4**

(22) Anmeldetag: **10.11.88**

(51) Int. Cl.4: **F16J 15/32 , F16J 15/56 , F16J 15/48**

(30) Priorität: **19.11.87 DE 3739179**

(43) Veröffentlichungstag der Anmeldung:
**24.05.89 Patentblatt 89/21**

(84) Benannte Vertragsstaaten:
**AT BE CH DE ES FR GB GR IT LI LU NL SE**

(71) Anmelder: **Busak + Luyken GmbH & Co.**
**Handwerkstrasse 5-7**
**D-7000 Stuttgart 80(DE)**

(72) Erfinder: **Edlund, Roy**
**Mittlerer Bauernwaldweg 22**
**D-7000 Stuttgart 1(DE)**

(74) Vertreter: **Patentanwälte Kohler - Schwindling**
**- Späth**
**Hohentwielstrasse 41**
**D-7000 Stuttgart 1(DE)**

(54) **Dichtungsanordnung.**

(57)

1. Dichtungsanordnung

2.1 Dichtungsanordnung mit einem zähelastischen Dichtring (5) und einem gummielastischen Spannring (6) haben sich zum Abdichten einer Linearbewegung bewährt. Bei ihrem Einsatz als Wellendichtung kann es leicht zu einer Mitnahme des Dichtringes (5) durch die Welle kommen, die eine schnelle Zerstörung der Dichtungsanordnung zur Folge hat. Durch die Erfindung soll die Gefahr einer solchen Zerstörung vermieden werden.

2.2. Nach der Erfindung wird die Außenfläche (51) des Dichtringes (5) als Kegelfläche ausgebildet. Der Spannring (6) kommt zwischen diese Kegelfläche und die niederdruckseitige Flanke(41) der Nut (4) zu liegen. Das über Entlastungsnuten (58) an die Außenseite des Dichtringes (5) gelangende Druckmedium preßt den Spannring (6) in den Keilspalt zwischen Außenfläche (51) des Dichtringes und Stirnfläche (41) der Nut (4). Dadurch wird der Dichtring (5) in der Nut (4) verkeilt und an einer Drehung gegenüber dem die Nut (4) aufweisenden Maschinenteil (2) und dem Spannring (6) gehindert.

EP 0 316 750 A1

**Dichtungsanordnung**

Die Erfindung betrifft eine Anordnung zum Abdichten des Spaltes zwischen zwei zueinander konzentrischen, gegeneinander beweglichen, insbesondere gegeneinander drehbaren Maschinenteilen, von denen das äußere eine Nut und das innere eine der Nut gegenüberliegende glatte Anlagefläche aufweist, mit einem in die Nut des äußeren Maschinenteiles eingelegten Dichtring aus zähelastischem Kunststoff, der eine an der Anlagefläche des inneren Maschinenteiles anliegende Dichtkante aufweist, und mit einem den Dichtring umgebenden und radial an dessen Außenfläche belastenden Spannring aus gummielastischem Material, der an der Dichtkante ein Pressungsmaximum erzeugt.

Derartige Dichtungen sind in vielen Ausführungsformen bekannt. Ihnen allen ist gemeinsam, daß der Spannring nicht nur die Aufgabe hat, den Anpreßdruck an der Dichtkante des Dichtringes zu beeinflussen, sondern auch den Dichtring gegenüber der Nut in dem äußeren Maschinenteil abzudichten. Zu diesem Zweck ist der gummielastische Spannring so dimensioniert, daß er zwischen der zylindrischen Außenfläche und dem dazu konzentrischen Nutengrund eingespannt ist.

Bei diesen Dichtungen tritt immer wieder das Problem auf, daß es zu einer Drehung des Dichtringes gegenüber dem Spannring kommen kann. Beispielsweise kann infolge von Temperaturdifferenzen eine Dehnung stattfinden, die ein Haften zwischen dem Dichtring und der glatten Anlagefläche des inneren Maschinenteiles zur Folge hat, so daß dann eine Gleitbewegung zwischen dem Dichtring und dem elastomeren Spannring stattfindet. Ein solcher Zustand führt aber schnell zur Überhitzung an der Gleitfläche zwischen den beiden Ringen und damit zu einem Ausfall der Dichtung, weil die Reibungswärme durch die aus Kunststoff bestehenden Ringe hindurch nicht schnell genug abgeleitet werden kann.

Bei einer aus der DE-OS 32 07 327 bekannten Dichtungsanordnung wurde versucht, ein Verdrehen der beiden Ringe der Dichtungsanordnung gegeneinander durch radiale Stifte zu vermeiden, die in dem äußeren Spannring verankert sind und in radiale Bohrungen der inneren Dichtringes eingreifen. Es hat sich gezeigt, daß die Anordnung der radialen Stifte nicht ausreichend ist, um die Kräfte aufzunehmen, die eine Relativdrehung zwischen beiden Ringen bewirken, sondern daß es dann, wenn die Betriebsbedingungen zu einer Relativbewegung zwischen den beiden Ringen Anlaß geben, zu einer Zerstörung der Ringe durch die in die Ringe eingreifenden Stifte kommt.

Demgemäß liegt der Erfindung die Aufgabe zugrunde, eine Dichtungsanordnung der eingangs genannten Art so auszubilden, daß eine relative Drehung des Dichtringes gegenüber dem Spannring nicht mehr erfolgen kann.

Diese Aufgabe wird nach der Erfindung dadurch gelöst, daß die Außenfläche des Dichtringes eine Kegelfläche ist, deren Mantellinie mit der Achse der Anordnung einen Winkel zwischen 30° und 60° bildet und deren Durchmesser von dem niederdruckseitigen zum hochdruckseitigen Ende des Dichtringes zunimmt, daß der Durchmesser der Nut größer ist als der äußere Durchmesser des den Dichtring umgebenden Spannringes und die Breite der Nut nicht wesentlich größer ist als die axiale Länge des Dichtringes, so daß der Spannring sich an der einen Flanke der Nut dichtend abstützt und der Dichtring den Axialdruck des Spannringes an der anderen Flanke der Nut abstützt, und daß die hochdruckseitige Stirnfläche des Dichtringes mit Entlastungsnuten versehen ist.

Bei der erfindungsgemäßen Dichtungsanordnung liegt demgemäß der Spannring nicht in der herkömmlichen Weise zwischen der Außenfläche des Dichtringes und dem Grund der die Ringe aufnehmenden Nut, sondern in einem Keilspalt, der von der kegelförmigen Außenfläche des Dichtringes und der niederdruckseitigen Flanke der die Ringe aufnehmenden Nut begrenzt wird. Auf diese Weise wird nicht nur ein sehr hoher Reibungsschluß zwischen der Kegelfläche des Dichtringes und dem in den Keilspalt durch den Mediumdruck hineingepreßten Spannring erzielt, sondern es erfährt der Dichtring auch eine gewisse Verformung im Sinne einer Kippung um die an dem inneren Maschinenteil anliegende Dichtkante, weil sein innerer Rand, der von dem Mediumdruck belastet wird, gegen die niederdruckseitige Flanke der Nut gepreßt wird, wogegen der äußere Rand von dem in den Keilspalt hineingepreßten Spannring an die hochdruckseitige Flanke der Nut angepreßt wird. Daher wird der Dichtring an einer Rotation gegenüber dem äußeren Bauteil und damit gegenüber dem Spannring nicht nur durch die Reibung zwischen Spannring und Dichtring gehindert, sondern auch durch die Reibung zwischen den Endflächen des Dichtringes und den benachbarten Flanken der den Dicht ring aufnehmenden Nut. Demgemäß wird der Dichtring in der Nut des größeren Maschinenteiles gewissermaßen verspannt und dadurch an einer Drehung wirksam gehindert, so daß auch unter sehr ungünstigen Bedingungen die Relativbewegung zwischen der Dichtkante des Dichtringes und dem inneren Maschinenteil erhalten bleibt. Dabei ist von besonderem Vorteil, daß die zum Arretieren des Dichtringes in der Nut dienenden Kräfte im wesentlichen axial gerichtet sind und daher nicht die Dichtkante belasten, so daß vielmehr durch Wahl des Spannringes und der Form des Dichtringes für eine Entlastung der Dichtkante gesorgt werden kann, bei der gewährleistet ist, daß auch bei sehr hohen Mediendrücken die zulässigen Kräfte nicht überschritten werden und zugleich eine stets einwandfreie Abdichtung gewährleistet ist.

Es ist ohne weiteres erkennbar, daß die erfindungsgemäße Dichtungsanordnung sehr viele Gestaltungsmöglichkeiten für die Querschnitte des Dichtringes und des Spannringes zuläßt. Bevorzugt wird eine Ausführungsform des Dichtringes, bei dem die Dichtkante von dem hochdruckseitigen Rand eines an der Innenseite des Dichtringes an dessen niederdruckseitigem Ende angebrachten Steges gebildet wird. Die Verwendung eines solchen Steges führt zu einem realtiv dünnwandigen Dichtring, der etwa die Form einer Scheibe mit einem abgewinkelten Rand aufweist und deshalb besonders gut zum Zwecke der Verspannung in der Nut deformierbar ist. Dabei soll der Abstand der Dichtkante von der niederdruckseitigen Stirnfläche des Dichtringes höchstens halb so groß sein wie dessen axiale Länge und vorzugsweise etwa das 0,4-fache der axialen Länge des Dichtringes betragen. Bei den gegenwärtig verfügbaren Werkstoffen sollte die Dicke oder axiale Länge des mit der Dichtkante versehenen Abschnittes des Dichtringes 0,5 mm nicht unterschreiten. Weiterhin hat es sich aus dem genannten Grund als zweckmäßig erwiesen, wenn die radiale Ausdehnung der niederdruckseitigen Stirnfläche des Dichtringes mindestens doppelt so groß ist wie der Abstand der Dichtkante von dieser Stirnfläche.

Von besonderem Vorteil ist es, daß die erfindungsgemäße Dichtungsanordnung keinen besonderen, kompliziert gestalteten Spannring benötigt. Vielmehr kann als Spannring ein normaler O-Ring verwendet werden. Dabei soll der Schnurdurchmesser eines solchen O-Ringes vorzugsweise etwa das 0,4- bis 0,9-fache der axialen Länge des Dichtringes betragen. Auch hier sollte eine gewisse Mindestdicke der Schnur nicht unterschritten werden, die gegenwärtig bei einem Durchmesser von 1,2 mm liegt. Allgemein gilt, daß der Schnurdurchmesser des Dichtringes um so kleiner sein soll, je größer der Winkel β zwischen der Mantellinie der Kegelfläche und der Achse der Dichtungsanordnung ist.

Als besonders vorteilhaft hat sich eine Größe des Winkels zwischen der Mantellinie der Außenfläche des Dichtringes und der Ringachse von etwa 45° erwiesen.

Wie auch bei anderen Dichtungen, insbesondere solchen für eine hin- und hergehende Bewegung, ist es auch bei der erfindungsgemäßen Dichtung von Vorteil, wenn der sich von der Dichtkante bis zur niederdruckseitigen Stirnfläche erstreckende Abschnitt der Innenfläche des Dichtringes mit der Anlagefläche am inneren Maschinenteil einen sich in Richtung auf die Niederdruckseite öffnenden Winkel von höchstens 10° bildet. Auf diese Weise wird die Dichtkante eindeutig definiert und es bilden die beiden Flächen einen sich zur Niederdruckseite hin öffnenden Keilspalt, der in dem Fall, daß die gegeneinander abgedichteten Maschinenteile auch eine hin- und hergehende Bewegung gegeneinander ausführen, eine Rückschleppwirkung hat. Daher ist eine solche Ausführungsform der Erfindung besonders für solche Fälle geeig net, bei denen die gegeneinander abzudichtenden Teile eine kombinierte Rotations- und Linearbewegung ausführen.

Wie oben dargelegt, beruht die zuverlässige Arbeitsweise der erfindungsgemäßen Dichtungsanordnung unter anderem darauf, daß der Dichtring zwischen den Flanken der ihn aufnehmenden Nut gewissermaßen verkeilt wird. Daher darf die Breite der Nut nicht wesentlich größer sein, als die axiale Länge des Dichtringes und sollte höchstens um 10% größer sein als diese Länge.

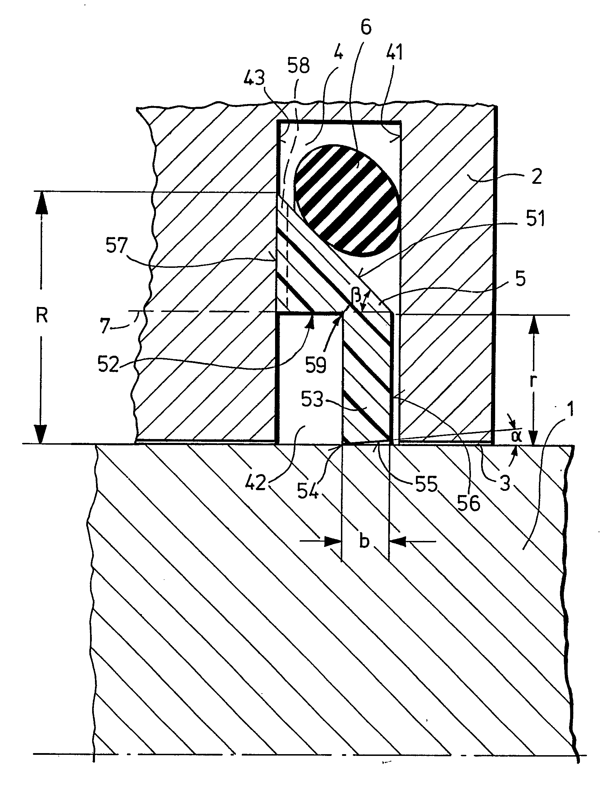

Die Erfindung wird im folgenden anhand des in der Zeichnung dargestellten Ausführungsbeispieles näher beschrieben und erläutert. Die der Beschreibung und der Zeichnung zu entnehmenden Merkmale können bei anderen Ausführungsformen der Erfindung einzeln für sich oder zu mehreren in beliebiger Kombination Anwendung finden. Die Zeichnung zeigt einen Querschnitt durch eine Dichtungsanordnung nach der Erfindung.

Die in der Zeichnung dargestellte Dichtungsanordnung dient zur Abdichtung einer Welle 1 gegenüber einer Gehäusewand 2. Die Gehäusewand 2 weist eine Bohrung 3 auf, die von der Welle 1 durchsetzt wird und deren Durchmesser nur wenig größer ist als der Durchmesser der Welle 1. In der Gehäusewand 2 befindet sich eine zur Oberfläche der Bohrung 3 hin offene Ringnut 4, in der sich ein Dichtring 5 und ein Spannring 6 befinden. Der Dichtring 5 besteht in bekannter Weise aus einem zähelastischen Material, insbesondere aus einem Kunststoff auf der Basis von Polytetrafluorethylen oder Polyurethan, wogegen der Spannring aus einem gummielastischen Material, also insbesondere einem elastomeren Kunststoff, besteht.

Der Dichtung 5 weist eine kegelförmige Außenfläche 51 und eine zylindrische Innenfläche 52 auf, die sich von der Hochdruckseite des Dichtringes aus bis zu einem radial nach innen ragenden Steg 53 erstreckt, der sich an die niederdruckseitige Stirnfläche des Dichtringes anschließt und dessen hochdruckseitiger Rand die Dichtkante bildet, mit welcher der Dichtring am Umfang der Welle 1 anliegt. Die Innenfläche 55 des Steges steigt von dieser Dichtkante 54 aus gegenüber dem Umfang der Welle 1 um einen kleinen Winkel $\alpha$ von etwa 5° an.

Die Mantellinien der kegelförmigen Außenfläche 51 bilden mit der in der Zeichnung durch die gestrichelte Linie 7 veranschaulichten Achsrichtung der Dichtungsanordnung einen Winkel $\beta = 45°$. Dabei sind die Dimensionen so gewählt, daß die Breite b des Steges 53 geringer ist als die axiale Länge des Dichtringes 5 und die radiale Ausdehnung r an der niederdruckseitigen Stirnfläche 56 etwa gleich dem radialen Abstand der zylindrischen Innenfläche 52 von der Dichtkante 54 ist und etwa die Hälfte der radialen Ausdehnung R an der hochdruckseitigen Stirnfläche 57 beträgt. Dort ist der Dichtring 5 mit radialen Entlastungsnuten 58 versehen, durch die hindurch das abzusperrende Medium an die Außenseite des Dichtringes 5 gelangen kann.

Die den Dichtring 5 aufnehmende Nut 4 ist nur wenig breiter als der Dichtring 5 lang ist, so daß sie den Dichtring mit nur gerigem Spiel aufnimmt. Allerdings ist diese Nut 4 so tief, daß der an der Außenseite 51 des Dichtringes anliegende Spannring 6 nicht den Grund der Nut 4 berrührt. Bei dem Spannring 6 handelt es sich um einen O-Ring, dessen Schnurdurchmesser kleiner ist als die axiale Länge des Dichtringes 5. Ferner ist der Durchmesser des Spannringes 6 so bemessen, daß dieser Ring unter Vorspannung an der Außenfläche 51 des Dichtringes 5 anliegt und wegen der Kegelform dieser Fläche bestrebt ist, sich unter einer gewissen Vorspannung auch an die niederdruckseitige Flanke 41 der Nut 4 anzulegen.

In der Zeichnung ist diese Dichtungsanordnung im unbelasteten Zustand dargestellt. Wird diese Dichtung von der in der Zeichnung linken Seite her einem unter hohem Druck stehenden Medium ausgesetzt, so wirkt dieses Medium nicht nur in dem die Welle 1 umgebenden Raum 42 auf den Dichtring, sondern gelangt auch durch die Entlastungsnuten 58 hindurch auf die Hochdruckseite des Spannringes 6. Daher wird einerseits der Dichtring 5 im Bereich seines Steges 53 und die niederdruckseitige Flanke 41 der Nut 4 angelegt und gleichzeitig der Dichtring 6 in den Keilspalt hineingepreßt, der von der niederdruckseitigen Flanke 41 der Nut und der kegelförmigen Anlagefläche 51 des Dichtringes begrenzt wird. Der an seiner Außenseite von dem unter hohem Druck stehenden Medium belastete Spannring übt dabei nicht nur eine Radialkraft auf den Spannring aus, sondern über die kegelförmige Anlagefläche 51 auch eine Axialkraft, die zur Hochdruckseite hin gerichtet ist und dazu führt, daß sich der Spannring 5 unter entsprechender Deformation, die einer Art Kippbewegung um die Dichtkante 54 herum entspricht, mit seiner hochdruckseitigen Stirnfläche 57 an die hochdruckseitige Flanke der Nut 4 anlegt. Dabei verformt sich der Dichtring 5 auch im Bereich der Schwachstelle 59, die sich neben dem in den Steg 53 angrenzenden Ende der zylindrischen Innenfläche 52 befindet, in der Weise, daß die Stirnfläche 57 an der Flanke der Nut 4 flach zu Anlage kommen kann. Es findet auf diese Weise eine Art Verkeilung des Dichtringes 5 in der Nut 4 statt, durch die mit Sicherheit verhindert wird, daß selbst unter ungünstigsten Betriebsbedingungen die von der Welle 1 auf den Dichtring 5 ausgeübten Reibungskräfte so stark werden, daß der Dichtring von der Welle entgegen den vom Spannring und den Nutwandungen auf den Dichtring ausgeübten Reibungskräfte mitgenommen wird. Vielmehr findet ein derart sicheres Verspannen des Dichtringes in der Nut 4 der Gehäusewand 2 statt, daß es bisher nicht gelungen ist, künstlich Betriebsbedingungen zu schaffen, bei denen eine Rotation des Dichtringes 5 mit der gefürchteten schnellen Zerstörung der Dichtungsanordnung stattgefunden hätte.

Die beschriebene Dichtungsanordnung zeichnet sich weiterhin durch hervorragende Dichtungseigenschaften und eine sehr hohe Lebensdauer aus, die dadurch bedingt ist, daß insbesondere durch die Bemessung der Breite b des Steges 53 in bezug auf die axiale Länge des Dichtringes 5 eine starke Entlastung der Dichtkante erzielt und demgemäß durch die Formgebung von Dichtring und Spannring die auf die Dichtkante 54 wirkende Kraft sehr genau dosiert werden kann.

Es ist bemerkenswert, daß die Ringe der erfindungsgemäßen Dichtungsanordnung relativ kleine Querschnitt haben können und diese Querschnitte weitgehend unabhängig vom Wellendurchmesser sind. So hatte beispielsweise ein Dichtring, der von der in der Zeichnung dargestellten Form nur insofern abwich, als seine der Innenfläche 52 entsprechende Innenfläche als zur kegelförmigen Außenfläche 51 parallele Kegelfläche ausgebildet war, und der zu Abdichtung einer Welle von 50 mm Durchmesser bestimmt war, lediglich eine Breite von 2,8 mm und einen Außendurchmesser von 61,5 mm. Die Breite des Steges 53 mit der Dichtkante 54 betrug lediglich 1,2 mm. Der Abstand der kegelförmigen Außenfläche 51 zu der dazu parallelen Innenfläche betrug 2 mm. Dieser Dichtungsring war in einer Nut von 3 mm Breite angeordnet, deren Durchmesser 65,5 mm betrug. Der als Spannring verwendete O-Ring hatte einen Innendurchmesser von 58,4 mm und einen Schnurdurchmesser von 2,6 mm. Wie bereits erwähnt, können Ringe mit gleichem Querschnitt für einen großen Bereich unterschiedlicher Durchmesser verwendet werden und es ist keineswegs eine etwa zum Ringdurchmesser proportionale Änderung des Ringquerschnittes erforderlich. Als kleinste Abmessungen, die gegenwärtig im Hinblick auf die zur Verfügung stehenden Werkstoffe und die beherrschte Fertigungstechnik möglich sind, sind eine Stegbreite b von 0,5 mm und ein Schnurdurchmesser des O-Ringes von 1,2 mm zu nennen.

Wie bereits ebenfalls erwähnt, sind die Querschnittsformen von Dichtring und Spannring in vielfältiger Weise abwandelbar. Es kommt für die Wirkung der erfindungsgemäßen Dichtung lediglich darauf an, daß der auf eine kegelförmige Außenfläche wirkende Spannring den Dichtring zu einer Kippbewegung um seine Dichtkante veranlassen kann, durch die sich der Dichtring in der ihn aufnehmenden Nut gewissermaßen verkeilt. Dabei beeinflußt der Querschnitt des Dichtringes dessen Vewindungsteifigkeit und damit dessen Widerstand gegen eine Deformierung durch die vom Spannring übertragenen Kräfte. Es ist ohne weiteres ersichtlich, daß solche Verformungen umso geringere Kräfte erfordern, je dünnwandiger der Dichtring ist. Daher könnte es zweckmäßig sein, zum Abdichten von Medien, die unter einem verhältnismäßig geringen Druck stehen, sowohl die Dicke b des Steges als auch die Dicke des von der Kegelfläche 51 begrenzten Ringabschnittes möglichst dünn zu halten. Andererseits könnte es zweckmäßig sein, zum Abdichten von Medien, die unter einem sehr hohen Druck stehen, die Innenfläche des Dichtringes als zur Außenfläche 51 parallele Kegelfläche auszubilden, um die Schwachstelle 59 zu vermeiden, und gegebenenfalls sogar eine solche kegelige Innenfläche unmittelbar von der Dichtkante 54 ausgehen zu lassen. Ebenso kann durch Variation des Winkels β der kegelförmigen Außenfläche 51 die Verteilung der durch den Spannring 6 übertragenen Kräfte auf die Radial- und eine Axialkomponenten verändert und damit optimal an die im Einzelfall herrschenden Verhältnisse angepaßt werden.

## Ansprüche

1. Anordnung zum Abdichten des Spaltes zwischen zwei zueinander konzentrischen, gegeneinander beweglichen, insbesondere gegeneinander drehbaren Maschinenteilen, von denen das äußere eine Nut und das innere eine der Nut gegenüberliegende glatte Anlagefläche aufweist, mit einem in die Nut des äußeren Maschinenteiles eingelegten Dichtring aus zähelastischem Kunststoff, der eine an der Anlagefläche des inneren Maschinenteiles anliegende Dichtkante aufweist, und mit einem den Dichtring umgebenden und an dessen Außenfläche radial belastenden Spannring aus gummielastischem Material, der an der Dichtkante ein Pressungsmaximum erzeugt, dadurch gekennzeichnet, daß die Außenfläche (51) des Dichtringes (5) eine Kegelfläche ist, deren Mantellinie mit der Achse (7) der Anordnung einen Winkel (β) zwischen 30° und 60° bildet und deren Durchmesser von dem niederdruckseitigen zum hochdruckseitigen Ende des Dichtringes (5) zunimmt, daß der Durchmesser der Nut größer ist als der äußere Durchmesser des den Dichtring (5) umgebenden Spannringes (6) und die Breite der Nut (4) nicht wesentlich größer ist als die axiale Länge des Dichtringes (5), so daß der Spannring (6) sich an der einen Flanke (41) der Nut (4) dichtend abstützt und der Dichtring (5) den Axialdruck des Spannringes (6) an der anderen Flanke (43) der Nut abstützt, und daß die hochdruckseitige Stirnfläche (57) des Dichtringes mit Entlastungsnuten (58) versehen ist.

2. Anordnung nach Anspruch 1, dadurch gekennzeichnet, daß die Dichtkante (54) von dem hochdruckseitigen Rand eines an der Innenseite des niederdruckseitigen Endes des Dichtringes (5) angebrachten Steges (53) gebildet wird.

3. Anordnung nach Anspruch 1 oder 2, dadurch gekennzeichnet, daß der Abstand (b) der Dichtkante (54) von der niederdruckseitigen Stirnfläche (56) des Dichtringes (5) höchstens halb so groß ist wie dessen axiale Länge und vorzugsweise etwa das 0,4-fache der axialen Länge des Dichtringes (5) beträgt.

4. Anordnung nach einem der vorhergehenden Ansprüche, dadurch gekennzeichnet, daß die radiale Ausdehnung (r) der niederdruckseitigen Stirnfläche (56) des Dichtringes (5) mindestens doppelt so groß ist wie der Abstand (b) der Dichtkante (54) von dieser Stirnfläche (56).

5. Anordnung nach einem der vorhergehenden Ansprüche, dadurch gekennzeichnet, daß daß der Spannring (6) von einem O-Ring gebildet wird, dessen Schnurdurchmesser etwa das 0,4- bis 0,9-fache der axialen Länge des Dichtringes (5) beträgt.

6. Anordnung nach einem der vorhergehenden Ansprüche, dadurch gekennzeichnet, daß der Winkel (β) zwischen der Mantellinie der Außenfläche (51) des Dichtringes (5) und der Ringachse (7) etwa 45° beträgt.

7. Anordnung nach einem der vorhergehenden Ansprüche, dadurch gekennzeichnet, daß der sich von der Dichtkante (54) bis zur niederdruckseitigen Stirnfläche (56) erstreckende Abschnitt (55) der Innenfläche des Dichtringes (5) mit der Anlagefläche (3) am inneren Maschinenteil (1) einen sich in Richtung auf die Niederdruckseite öffnenden Winkel (α) von höchstens 10° bildet.

8. Anordnung nach einem der vorhergehenden Ansprüche, dadurch gekennzeichnet, daß die Breite der Nut (4) höchstens um 10% größer ist als die axiale Länge des Dichtringes (5).

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 026 063  (BUSAK & LUYKEN)<br>* Figuren; Anspruch 1 *<br>--- | 1 | F 16 J  15/32<br>F 16 J  15/56<br>F 16 J  15/48 |
| A | DE-A-3 642 721  (ELRING)<br>* Figur 3; Spalte 3, Zeile 65 - Spalte 4, Zeile 26 *<br>--- | 1 | |
| A | DE-A-3 606 886  (MÜLLER)<br>* Figuren 1,7; Spalte 8, Zeilen 9-51 *<br>------ | 1 | |

**RECHERCHIERTE SACHGEBIETE (Int. Cl.4)**

F 16 J

Der vorliegende Recherchenbericht wurde für alle Patentansprüche erstellt

| Recherchenort | Abschlußdatum der Recherche | Prüfer |
|---|---|---|
| DEN HAAG | 20-01-1989 | NARMINIO A. |